# EUROPEAN PATENT SPECIFICATION

(11) **EP 3 005 459 B1**
(45) Date of publication and mention of the grant of the patent: **25.12.2019**
(21) Application number: 13886585.2
(22) Date of filing: 20.06.2013
(51) Int. Cl.: H01M 8/083, H01M 8/1004, H01M 8/1086, H01M 8/1072, B01D 69/12

(54) **CHEMICAL BONDING FOR CATALYST/MEMBRANE SURFACE ADHERENCE IN MEMBRANE ELECTROLYTE FUEL CELLS**
CHEMISCHE VERBINDUNG ZUR KATALYSATOR-/MEMBRANOBERFLÄCHENHAFTUNG IN BRENNSTOFFZELLEN MIT MEMBRANELEKTROLYTEN
LIAISON CHIMIQUE POUR L'ADHÉRENCE DE SURFACE DE CATALYSEUR/MEMBRANE DANS DES PILES À COMBUSTIBLE À ÉLECTROLYTE SOUS FORME DE MEMBRANE

(30) Priority: 07.06.2013 US 201313912402
(43) Date of publication of application: 13.04.2016
(73) Proprietor: Elbit Systems Land and C4I Ltd., 4250712 Netanya (IL)
(72) Inventor: DEKEL, Dario, 30951 Zichron Yaakov (IL); PAGE, Miles, 45105 Hod Hasharon (IL)
(74) Representative: Pearl Cohen Zedek Latzer Baratz UK LLP
(86) International application number: PCT/IB2013/001781
(87) International publication number: WO 2014/195758

(56) References cited:
- EP-A1- 1 873 860
- EP-B1- 1 702 669
- WO-A1-2011/154835
- WO-A1-2012/052945
- WO-A1-2014/165072
- US-A1- 2011 300 466
- YUAN-CHENG CAO ET AL: "Preparation of alkaline anion exchange polymer membrane from methylated melamine grafted poly(vinylbenzyl chloride) and its fuel cell performance", JOURNAL OF MATERIALS CHEMISTRY, vol. 21, no. 34, 1 January 2011 (2011-01-01), page 12910, XP055285078, GB ISSN: 0959-9428, DOI: 10.1039/c1jm12068a

## Description

### BACKGROUND

The quality of the bond between the catalyst layer (CL) and the membrane is an important parameter in membrane electrolyte fuel cell technology. The interfacial contact of the CL and the cell membrane has to be continuous to the nanometer scale in order to achieve effective catalyst utilization and to minimize internal cell resistance. The critical importance of the CL-cell membrane interface has been scarcely reported. Pivovar and Kim [J. Electrochem. Soc., 154 (8) B739-B744 (2007)] and Kim et al. [2006 DOE OHFCIT Program Review, May 16, 2006] have presented some details on the crucial significance of the quality of CL-cell membrane interface on the fuel cell performance. In the prior art, Polymer Electrolyte Membrane (PEM) fuel cell technology, the bond between catalyst and membrane is formed relatively readily, typically by hot-pressing a CL/membrane/CL combination or "sandwich" - the so called "CCM" (Catalyst-Coated Membrane). Because the perfluoro-carbon backbone of ionomers used in PEM fuel cells exhibits some thermoplasticity at temperatures below the chemical stability limit, the result of hot-pressing is typically inter-diffusion of the polymer components in the CL and in the surface of the membrane. Such inter-diffusion can generate bonding that can be described as zipping together of micro-fingers of polymeric material protruding from each side of the interface. This form of bonding can secure lasting interfacial adherence in CCMs for PEM fuel cells, typically surviving long term operation at high cell current densities and experiencing significant number of wet-dry cycles.

Wet-dry cycles can be a major challenge to the integrity of the interfacial bond because of the dimensional changes associated with water uptake by the dry polymer material. These dimensional changes can be expected to cause significant stress in the CL/cell membrane interface and could result in gradual delamination that takes place depending, for instance, on: (i) the intrinsic strength of the as-formed interfacial bond and (ii) the dissimilarity of dimensional changes during wet-dry cycles in the materials forming the interfacial bond. In the case of the PEM fuel cell which employs ionomers with perfluoro-carbon backbones, hot pressing under well-optimized pressure and temperature conditions can help to provide a CL/cell membrane interface of good adhesion and of well-matched dimensional changes on both sides of the interface during wet-dry cycles. The strength of the as-formed bond has been confirmed in peel-strength measurements.

In contrast, with ionomers having hydrocarbon, or cross-linked hydrocarbon backbones, such as, for example, in the anion-conducting polymers developed to date, the quality of the CL/membrane interfacial bond formed by hot-pressing a thin film of catalyst/ionomer composite onto the membrane surface, is significantly less satisfactory. One reason is the negligible thermoplasticity of polymers with hydrocarbon backbones. Such polymers with hydrocarbon backbones do not achieve inter-diffusion of ionomeric components across the interface during hot-pressing at relatively low temperatures, for instance at temperatures less than 100°C. Alkaline Membrane Fuel Cells (AMFCs) based on ionomers with hydrocarbon backbones, can therefore suffer delamination at the CL/membrane interface that can become a major cause of performance loss and can lead to complete cell failure. Clearly, the negligible thermoplasticity of the poly[hydrocarbon] ionomers employed in the AMFC membrane and CL calls for alternative methods and structures for securing high quality CL/membrane bonds..

Cross-linking can provide excellent chemical bonding between poly[hydrocarbon] chains. Various cross-linking methods were used in membrane preparation for AMFCs. Xu and Zha [J. Membrane Sci., 199 (2002) 203-210], Park et al. [Macromol. Symp. (2007) 249-250, 174-182] and Robertson et al. [J. Am. Chem. Soc.(2010), 132, 3400-3404] used different diamine compounds to cross-link the polymer in membranes for Alkaline Membrane Fuel Cell (AMFC). Although membranes with cross-linked polymers exhibited excellent mechanical strength, after cross-linking, the membrane surface becomes rigid with very poor surface properties. Similar cross-linking approach within the membrane was applied by Wu et al. [J. Appl. Polymer Sci., 107 (2008) 1865-1871] using UV/thermal curing instead of diamine compounds. Quality of the cross-linked membrane surface, however, did not allow applying a CL on the membrane surface, consequently obtaining inadequate CL-cell membrane-CL interface bond quality.

Similarly to the approach of cross-linking the polymer material in the membrane alone, Varcoe and Slade [Electrochem. Comm., 8 (2006) 839-843] have cross-linked the polymer in the CL alone and mechanically pressed the electrode with such cross-linked CL onto an anion exchange membrane. Similar to other earlier studies of AMFCs, they also obtained poor CL-cell membrane bonding and concluded that inadequate CL-cell membrane interfaces are major limiters of power performance in AMFCs.

In contrast to all those approaches, the present disclosure provides a method of chemically bonding together a CL and an alkaline cell membrane of an AMFC wherein a chemical bond is created across the interface between the CL and the membrane and further, across the whole CCM when the CCM is prepared from membrane in precursor form catalyzed on both sides with catalyst layers containing ionomer also in precursor form.

WO 2014/165072 A1 is considered to be comprised in the state of the art under Article 54(3) EPC and discloses an alkaline membrane fuel cell comprising an anode electrode, a membrane electrolyte to conduct hydroxyl anion, a cathode electrode, wherein the electrodes each have a catalyst layer.

US 2011/300466 A1 discloses an alkaline membrane fuel cell including at least one of i) a catalyst coated OH- ion conducting membrane having a catalyst layer and an OH- ion conducting membrane, and ii) a catalyst coated carbonate ion conducting membrane having a catalyst layer and a carbonate ion conducting membrane.

### SUMMARY

The present invention provides a method of forming a catalyst coated membrane "CCM" for an alkaline membrane fuel cell "AMFC" as disclosed in appended claim 1.

In another aspect the amine based compound mixture comprises at least two of the following types of compounds:
(a) monoamine and/or linear diamine;
(b) free base tetrakis pyridinium porphyrin, free base tripyridinium porphyrin, free base dipyridinium porphyrin;
(c) branched polyethyleneimine, polypropyleneimine dendrimers; (d) free base tetrakis pyrrolidinium porphyrin, free base triprrolidinium porphyrin, free base dipyrrolidinium porphyrin; and
(e) free base tetrakis morpholinium porphyrin, free base trimorpholinium porphyrin, free base dimorpholinium porphyrin.

In another aspect the amine based compound mixture comprises:
(a) Monoamine and/or linear diamine
(b) Metal based tetrakis pyridinium porphyrin, metal based tripyridinium porhyrin, metal based dipyridinium porphyrin.

### BRIEF DESCRIPTION OF THE FIGURES

Figure 1 is a schematic diagram of an AMFC.
Figures 2a- 2b are schematic diagrams of AMFCs with chemical bonding.
Figure 3 is a schematic diagram of an example of a diphosphine cross-linked
   CL/membrane interface in an AMFC.
Figure 4 is a schematic diagram of an example of a diphosphine cross-linked interface of CL and cell membrane through a cross-linked thin film.
Figure 5 is a schematic diagram of an example of a diphosphine cross-linked CL/membrane interface, established through a cross-linked, thin polymer film of acidic functions.
Figure 6 shows an exemplary ionic cross-linking effect based on the ionic force of attraction between a negative sulfonate ion and a positive tetra alkyl ammonium ion interacting at the CL/cell membrane interface.
Figure 7 is a schematic diagram of an example of a UV cross-linked interface of quaternary phosphonium based CL and cell membrane, using diercaptohexane as cross-linking agent.
Figure 8 is a schematic diagram of an example of an interface involving a CL and membrane with quaternary phosphonium cations, using chloroacetyl groups as thermal cross-linking agent.
Figure 9 is a schematic diagram of an AMFC according to the invention with chemical bonding between the CL and the membrane interface and through the CL and further through the membrane itself and the CL on the other side of the membrane.
Figure 10 is a table illustrating the operation of the embodiment of Figure 9 of the invention.

### DETAILED DESCRIPTION

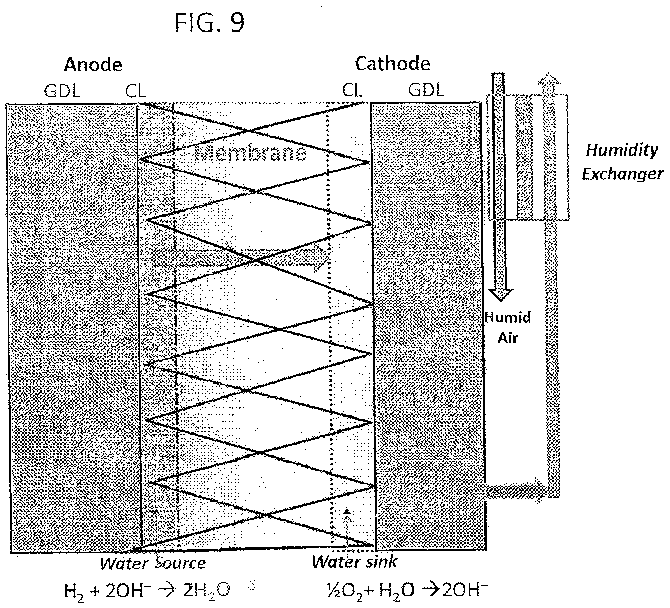

The invention provides a CCM for an AMFC having an OH-ion conducting catalyst layer and associated membrane where the ionomer throughout the entire CCM is cross-linked in one chemical step including cross-linking within the membrane and within the catalyst layers, thus enabling simultaneous bonding across the interface between the catalyst layers and the ion conducting membrane, as shown in Fig. 9. The through-the-CCM cross-linking can be achieved by a one step chemical treatment involving both cross-linking and functionalization, applied to a precursor-form CCM.

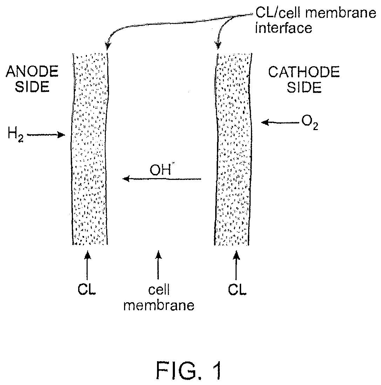

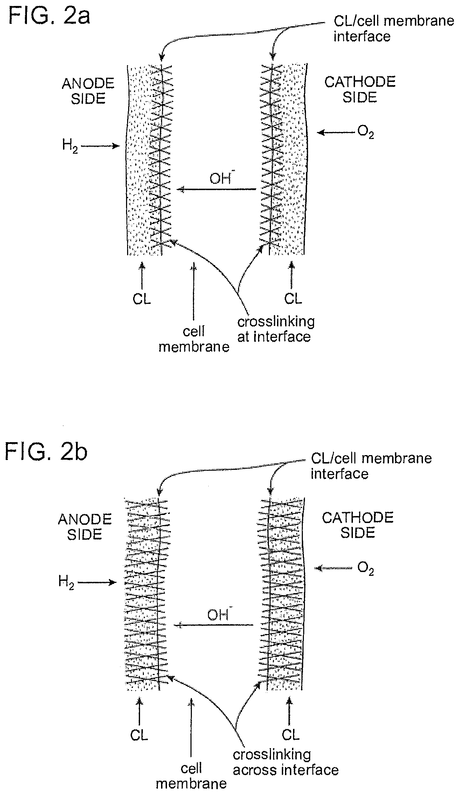

FIG. 1 shows a schematic diagram of an AMFC where the CL/membrane contact is established using thermo-mechanical tools alone. FIG. 2 shows a schematic diagram of an AMFC with chemical bonding between the CL and membrane surface in which the chemical bonding is across the CL-cell membrane interface, where the cross-linking based bond may be confined to the interface alone (e.g., FIG. 2a) and/or also involve some volume of the catalyst layer (e.g., FIG. 2b).

Further, the invention provides a CCM for an AMFC having an OH-ion conducting catalyst layer and associated membrane wherein the ionomer throughout the entire CCM is cross-linked in one chemical step including cross-linking within the membrane and within the catalyst layers, thus enabling simultaneous bonding across the interface between the catalyst layer and the ion conducting membrane, as shown in Fig. 9.

Below are descriptions of examples of the methods and processes according to the invention and are provided as illustrative examples only and are not intended to limit the scope of the invention as described herein.

As used herein, "alkyl", "C₁, C₂, C₃, C₄, C₅ or C₆ alkyl" or "C₁-C₆ alkyl" is intended to include C₁, C₂, C₃, C₄, C₅ or C₆ straight chain (linear) saturated aliphatic hydrocarbon groups and C₃, C₄, C₅ or C₆ branched saturated aliphatic hydrocarbon groups. For example, C₁-C₆ alkyl is intended to include C₁, C₂, C₃, C₄, C₅ and C₆ alkyl groups. Examples of alkyl include, moieties having from one to six carbon atoms, such as, but not limited to, methyl, ethyl, n-propyl, i-propyl, n-butyl, s-butyl, t-butyl, n-pentyl, s-pentyl or n-hexyl.

In certain embodiments, a straight chain or branched alkyl has six or fewer carbon atoms (*e*.*g*., C₁-C₆ for straight chain, C₃-C₆ for branched chain), and in another embodiment, a straight chain or branched alkyl has four or fewer carbon atoms.

In one embodiment, the alkyl group may be chemically linked to the backbone of the ionomers of the CL. For example, the alkyl group may be chemically linked to the hydrocarbon backbone of the ionomers of the CL.

In another embodiment, the alkyl group may be chemically linked to polymer structure of the membrane. For example, the alkyl group may be chemically linked to the hydrocarbon backbone of the membrane.

As used herein, "chemically linked," for example, refers to any manner in which the alkyl group may be linked to the backbone of the ionomers of the CL or the backbone of the polymer structure of the membrane. For example, the alkyl group may be linked to the backbone of the ionomers of the CL or the backbone of the polymer structure of the membrane through a chemical bond, *e.g.*, a C-C bond.

As used herein, "spacer" or "a spacer group", is, for example, intended to include any group known in the art used to optimize the length of a polymer molecule. In one embodiment, a spacer may be a polymer used in the art to optimize the length of a polymer molecule. In another embodiment, a spacer may be a hydrocarbon chain of certain length. For example, a spacer may be an alkyl chain (*e*.*g*., -CH₂-, -CH₂CH₂-, -CH₂CH₂CH₂-, -CHCH₃CH₂-, -CH₂CH₂CH₂CH₂-, - CHCH₃CH₂CH₂-, -C(CH₃)₂CH₂-, -CH₂CH₂CH₂CH₂CH₂-, -CHCH₃CH₂CH₂CH₂- or - CH₂CH₂CH₂CH₂CH₂CH₂-).

### EXAMPLE 1 (not according to the invention)

The invention provides a method of chemically bonding a CL to at least a portion of a surface of an AMFC membrane at an interface between the CL and the portion of the membrane surface. The method includes formulating a catalyst ink for application to the portion of the membrane surface where the ink includes at least one ionomer and one or more compounds or agents containing one or more cross-linking groups. The ionomer and the one or more cross-linking compounds or agents are mixed at a pre-determined ratio when preparing the ink. The one or more compounds or agents include compounds having one or more cross-linking groups suitable for chemically linking of one or more ionomeric functionalities of the CL and the cell membrane, across the CL/cell membrane interface. Upon application of a catalyst ink of such formulation to at least a portion of the membrane surface, the cross-linking groups of the compounds or agents of the ink formulation preferably chemically bond to one or more ionomer functional groups in the cell membrane, thereby preferably establishing a well-bonded CL/membrane interface of low contact resistance. Similarly, the cell membrane may be formed from a formulation including one or more ionomeric materials and one or more chemical components having one or more cross-linking groups suitable for chemically linking to one or more ionomeric functionalities of the catalyst layer ink formulation.

The one or more compounds or agents of the catalyst ink formulation having cross-linking capacity may include, but are not limited to, diphosphines, triphosphines, monophosphine and diphosphines mixtures, diamines, triamines, monoamine and diamine mixtures, and any phosphine or amine having the general formula: (R1R2)X-R-X(R3R4) where X is P or N atom, R1 and R2, R3 and R4 are C1-C6 alkyl groups, independent of each other or which form a ring between each other; and R includes a "spacer" in the molecular structure and is selected to optimize the length of the polymer molecule. Examples of such compounds are e.g., hexaphenylbutanediphosphine (HPBDP), diethyl-dimethylbutane diamine (DEDMBDA) or other linear diamines. In addition, the one or more compounds or agents may include non-linear diphosphine or diamines, e.g., quinuclidine or diazabicyclooctane (DABCO), alone or in combination with a monoamine. Further, the one or more compounds or agents may also include, but are not limited to, triallyl cyanurate, trimethylolpropane triacrylate, pentaerythritol triallylether, pentaerythritol tetrallylether, etc.

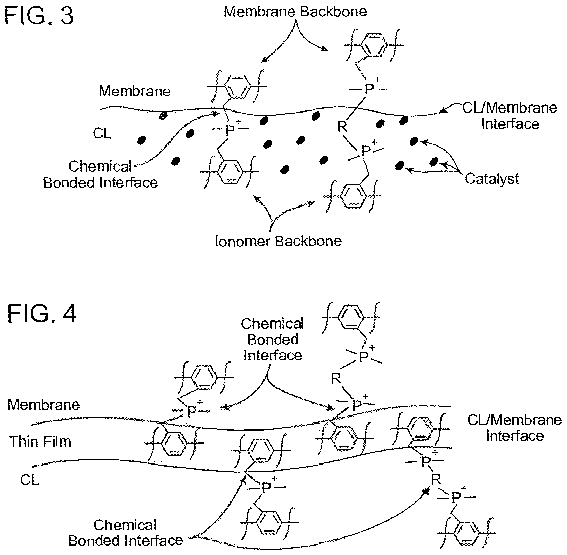

FIG. 3 shows a schematic diagram of a specific example of a diphosphine cross-linked CL/membrane interface in an AMFC.

### EXAMPLE 2 (not according to the invention)

A method includes formulating a thin surface film including at least one anion-conducting ionomer and containing one or more diphosphines, triphosphines, monophosphine and diphosphines mixtures, diamines, triamines, monoamine and diamine mixtures functional groups that facilitate cross-linking. The method can further include applying or casting the thin film onto at least a portion of the surface of the cell membrane before application of a catalyst ink formulation to the membrane surface to form a CL along the membrane surface. The thin film may have a thickness ranging from about 0.02 micrometer to about 1 micrometer, and preferably about 0.1 micrometer. The functional groups may be provided by any of the compounds or agents described above in Example 1. The method can further include applying or casting the catalyst ink formulation onto at least a portion of the surface of the membrane pre-covered by the thin film. Bonding between the CL and the membrane surface is achieved by cross-linking functional groups in the thin film with functional groups located at the surface of the membrane and the surface of the CL adjacent the thin film. The ionomer formulations and chemical structure of the CL and the cell membrane thereby remain practically unmodified despite such cross-linking and any undesirable effects of cross-linking on the ionic conductivity through the thickness of the CL and the cell membrane are minimized or prevented. FIG. 4 shows a schematic diagram of a specific example of a diphosphine cross-linked interface of CL and cell membrane through a cross-linked thin film.

### EXAMPLE 3 (not according to the invention)

A method includes formulating a thin surface film as described above in Example 2. Applying or casting the thin film onto a portion of the membrane surface is preferably followed by applying or casting a catalyst ink which includes an ionomer mixed at a pre-determined ratio with one or more compounds or agents containing one or more cross linking capable groups, suitable for chemically linking with one or more ionomeric functions, of the ionomeric material(s) in the thin film. Cross-linking can occur at the interfacial contact between the catalyst ink and the thin film.

### EXAMPLE 4 (not according to the invention)

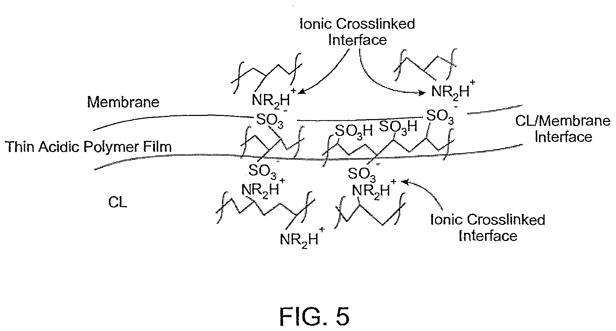

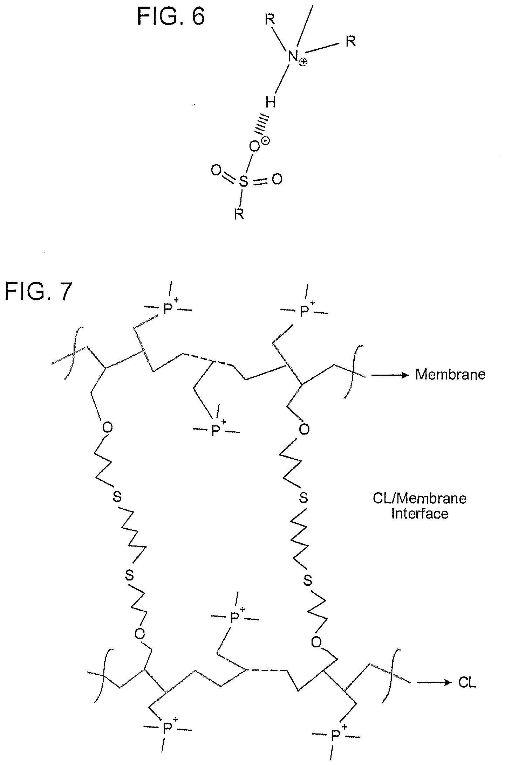

A method includes formulating a thin surface film as described above in Example 2; however, the cross linking functionality can be provided by an acidic polymer. The acidic polymer may include, but is not limited to, Nafion® or other molecule having the general formula: Ac1-R-Ac2, where Ac1 and Ac2 are acidic functional groups, such as, for instance, - COOH, -SO3H, or other acidic group. Ac1 and Ac2 can be the same or different groups. The method includes applying or casting the thin film onto at least a portion of the surface of the cell membrane before application of a catalyst ink formulation to the thin film-covered membrane surface. Application of the thin film results in an acid-base reaction at the interface of the thin film and the cell membrane. The reaction occurs between the OH⁻ ions of the alkaline ionomer of the cell membrane and the H⁺ ions of the acidic polymer of the thin film. The acid-base reaction can result in electrostatic bonds between the quaternary phosphonium R₃HP⁺ ions (or the quaternary ammonium R₃HN⁺ ions) in the anion conducting ionomer of the cell membrane and, for instance, the SO₃⁻ ions or COO⁻ ions of the acidic polymer of the thin film. After application of the thin film, the method includes applying the catalyst ink formulation to the thin film. Similarly, an acid-base reaction can result at the interface of the thin film and catalyst layer, between the OH⁻ ions of the CL ionomer and the H⁺ ions of the acidic polymer contained in the thin film to produce electrostatic bonds between R₄P⁺ ions or R₄N⁺ ions in the anion conducting ionomer and the SO₃⁻ ions or COO⁻ ions of the acidic polymer. The acidic polymer of the thin film thereby has the capacity to "tie" the surface of the CL to the surface of the cell membrane, by the electrostatic bonds formed at the interfaces between the thin film and cell membrane and the thin film and CL. FIG. 5 shows a schematic diagram of a specific example of a diphosphine cross-linked CL/membrane interface, established through a cross-linked, thin polymer film of acidic functions. FIG. 6 shows the specific ionic cross-linking effect based on the ionic force of attraction between a negative sulfonate ion and a positive tetra alkyl ammonium ion interacting at the CL/cell membrane interface.

### EXAMPLE 5 (not according to the invention)

A method includes formulating a thin surface film including UV absorbing functions provided by compounds having one or more UV sensitive groups. UV sensitive groups can include, for instance, UV initiators, as components of the thin film composition that facilitate UV-induced cross linking. Such UV sensitive groups can include, but are not limited to, epoxy or/and acrylate groups, e.g., of standard UV curing material(s) or unsaturated esters used in UV-curing adhesive technology, e.g., glycidylmethacrilate, pentaerylthritol triallylether, triallyl cyanurate, allylpentaerythritol (APE) and/or diercaptohexane (hexanedithiol), mixed with an appropriate photo initiator, e.g., 2-Hydroxy-2-methyl-1-phenyl-propan-1-one (Darocur® 173), Phenylglyoxylate (Darocur MBF®), benzophenone (Darocur BP®), 2-hydroxy-1-[4-(2-hydroxyethoxy)phenyl]-2-methyl-1-propanone (Irgacure® 2959), etc. The method can include applying or casting the thin film with UV sensitive groups onto at least a portion of the surface of the cell membrane before application of a catalyst ink formulation to the thin film-covered membrane surface. The cross-linking agent and UV initiator are added in low concentrations, for example <20wt% and more preferably less than 5wt % of the polymer content during thin-film casting. Subsequent to application of the thin film, the method can include applying the catalyst ink formulation onto the thin film and thereafter applying UV radiation to the membrane, the catalyst layer and the thin film. The exposure to UV can be for a few minutes, preferably for less than 10 minutes. UV radiation can facilitate cross linking of the UV sensitive groups in the thin film thereby preferably establishing chemical bonding of the CL to the surface of the membrane via the thin film. Applying UV radiation may include irradiating the cell membrane with UV radiation from the side of the membrane that has not been catalyzed. UV radiation absorption by the membrane is typically less than absorption by the metal-containing CL. Therefore, sufficient UV energy will hit the interface of the CL and the cell membrane and thereby trigger advantageously the cross linking between the CL and the membrane to chemically bond the CL and the membrane across the interface. One advantage of UV-induced cross linking as described is that such cross linking can be achieved at low temperatures, e.g., room temperatures, and such process can thereby avoid any degradation of temperature-sensitive polymers. FIG. 7 shows a schematic diagram of a specific example of a UV cross-linked interface of quaternary phosphonium based CL and cell membrane, using diercaptohexane as cross-linking agent.

### EXAMPLE 6 (not according to the invention)

A chemical composition of the catalyst ink and/or of the cell membrane may include one or more UV initiators to introduce the precursor functionalities of UV-induced cross linking as described above. Bonding at the interfacial contact of the catalyst ionomer and the cell membrane is achieved with application of UV radiation after the catalyst ink formulation has been applied to at least a portion of the surface of the cell membrane to form the CL.

### EXAMPLE 7 (not according to the invention)

A method includes applying or casting onto at least a portion of the surface of the cell membrane a thin film containing one or more compounds providing UV-induced cross linking functionalities and one or more UV initiators as described above in Example 5. The method can further include applying a catalyst ink formulation as described in Example 6, including one or more UV initiators intermixed with the one or more ionomers of the catalyst ink formulation to introduce UV-induced cross linking functionalities. The method can include applying or casting the catalyst ink formulation onto the thin film and thereafter applying UV radiation to facilitate UV cross linking.

### EXAMPLE 8 (not according to the invention)

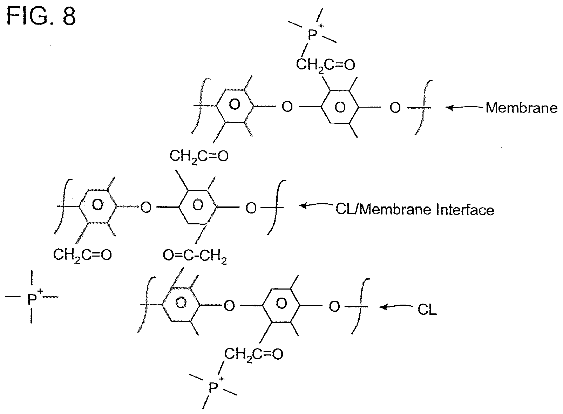

A method includes formulating a thin surface film including at least one anion-conducting ionomer and containing one or more compounds having constituents that provide thermal cross linking upon heating. The method can also include applying or casting the thin film onto at least a portion of the surface of the cell membrane before application of a catalyst ink formulation to the thin-film covered membrane surface. Such one or more compounds having constituents that provide thermally induced cross linking include polymers suitable for functionalizing with anionic groups, while remaining stable in mild alkaline environments, and for achieving thermal cross linking and bonding at relatively low temperatures, such as, for instance, temperatures within a range of from about 25° to about 120°C. For example, one such polymer is polyphenyleneoxide (PPO), either chloroacetylated, bromomethylated or aminated to form a polysulfone-based polymer ionomer with OH⁻ ion conductivity. In contrast to the ionomer, PPO can be cross linked at temperatures of a range from about 60°C to about 90°C. FIG. 8 shows a schematic diagram of a specific example of an interface involving a CL and membrane with quaternary phosphonium cations, using chloroacetyl groups as thermal cross-linking agent.

### EXAMPLE 9

A method includes formulating the cell membrane composition as a blend of one or more polymers configured for thermal cross linking in response to applications of heat and one or more ionomers configured for OH⁻ ion conductivity. The composition of the cell membrane in this embodiment can provide advantageous separate control of the membrane's conductivity and the degree of cross-linking.

As previously mentioned above, according to the present invention one or more components having cross-linking functionality may be introduced into the cell membrane chemical structure itself.

Thus, the present invention provides a method of stabilizing a catalyst coated membrane (CCM) for an Alkaline Membrane Fuel Cell (AMFC). The stabilization is accomplished by cross-linking the ionomer through the entire CCM. The cross-linking bonding affects not just the stability of the CCM through inter-chain bonding in the ionomeric phases, but also through the bonding across catalyst layer (CL)/ membrane (M) interfaces. In one embodiment, the method includes formulating a catalyst ink for application to a surface of the cell membrane that includes one or more components having cross-linking functionality. The cross-linking functionality is introduced into each of the CLs of the AMFC, and also into the cell membrane chemical structure. This method further includes applying or printing the catalyst ink formulation using ionomer precursors onto each surface of the cell membrane precursor.

Thus, we now describe an original approach to structural stabilization of a complete cell of an AMFC, including CLs and M as an entire and continuous anion conductive polymer structure. In a preferred method for fabrication of CCMs for AMFCs, special inks consisting of a mixture of non-ionic forms of polymer precursors are mixed with electrocatalysts and solvent to form a THF or ethyl acetate dispersion. The ink comprised of catalyst and non-ionic precursor form of ionomer precursor is then applied onto a non-ionic precursor form of the membrane, to achieve on application a homogenized CL with good adhesion to the membrane precursor.

The non-ionic forms of the polymers in both CLs and M contain chloride-based, bromide, or iodide functionalities, which allow further conversion to anionic form after the CCM is formed. The conversion to anionic form is then carried out simultaneously with the cross-linking, using a mixture of mono-ammines and multifunctional ammines. By doing this at the CCM level the cross-linking acts throughout all the entire CCM thickness dimension, meaning CLs, M and interfaces, in contrast to the prior art, in which cross-linking of interfaces has been the main target.

Such cross-linking method involving the CCM as a whole allows further stabilization in the entire cell, not just at the interfaces. Such type of in-situ cross-linking and functionalization approach allows interchain bonding within the ionomer phases together with interfacial bonding, resulting in well stabilized CCM and AMFC.

It has been found that it is likely that application of catalyst layer in precursor form onto a membrane in precursor form generates a better interfacial adhesion vs. application of a catalyst layer in ionic form to a membrane in ionic form. Consequently, the strength of the CL-M bond is pre-secured by superior adhesion in the precursor form of the unitized CCM, generating a better "interface preparation" for the subsequent cross-linking.

### EXAMPLE 10

An ink containing a non-ion conducting precursor was formed by mixing a chloride-form precursor and catalyst dispersed in THF solvent, with and without carbon nanoparticles. The non-ionic polymer-catalyst dispersion mix was then homogenized using double process of high power sonication. Then, the mix was applied onto both sides of a precursor form membrane film, also based on chloride form hydrocarbon precursor, forming a non-ionic-based CCM all in precursor form. Then, simultaneous conversion to anionic form and cross-linking in the entire precursor-form CCM was generated by immersing the complete non-ionic CCM into a solvent mixture of various reactants.

The reactants, for instance, are a mixture of both linear diamine and a free base tetrakis pyridinium porphyrin. By immersing the entire non-ionic CCM into this solvent mixture, the solvent mixture penetrates into the entire non-ionic CCM. By warming the solvent mix bath to, for by way of example only, 40C, the bases introduced with the solvent mix react with all the chloride sites in the entire precursor CCM imparting both ionic functionalization and cross-linking to all the polymer sites available in the CCM.

By allowing enough time for such simultaneous conversion to ionic form and cross-linking, by way of example only, 48 hours of immersion, the CCM formed is now a highly stable anion conducting CCM. At this stage, the anion conductive CCM is soaked in sulfuric acid solution. The purpose of this soaking is to remove all remaining unreacted amine and solvent from inside the CCM. To avoide to damage the catalysts in the CLs the acid needs to be properly chosen -- for instance, HCl can damage the catalytic activity of some catalysts.

Next, the washed anion conductive CCM is further soaked into a sodium bicarbonate aqueous solution. The purpose of this soaking is to convert the so formed anion conductive CCM functional groups to carbonate form, washing at same time all the remaining sulfuric acid from inside the CCM. Finally, the anion conductive CCM in carbonate form is further washed in pure water, dried, and pressed at room temperature. The purpose of the final pressing step is to ensure electronic percolation in the CLs of the anion conductive CCM so formed, by improving the contact between metal catalyst particles.

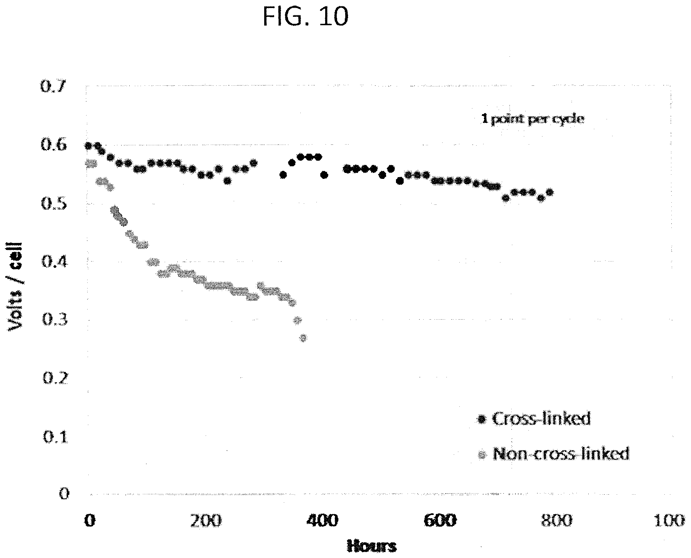

The through-the-thickness cross-linked CCM exhibits robust characteristics in terms of minimized mechanical deformation as well as lower swelling-deswelling cycling deformation. For instance, by way of an example, it has been found that while a regular formed anion conductive CCM suffers a 3mm deformation while applying a local pressure of 3barg of hydrogen, a fully cross-linking anion conductive CCM formed by simultaneous functionalization and cross-linking all across the CCM as shown in this invention, has less than 0.5mm deformation while applying a local pressure of 3barg of hydrogen under the same CCM clamping conditions. Moreover, while a regular formed anion conductive CCM has a 20% deformation while applying swelling-deswelling cycles, a fully cross-linking anion conductive CCM formed by simultaneous functionalization and cross-linking all across the CCM as shown in this invention, has less than 8% of deformation while applying swelling-deswelling cycles. Finally, while a regular formed anion conductive CCM exhibits significant drop in performance after 200 hours of operation under real cell operation conditions in hydrogen-air mode of operation at constant power density demand of around 150mW/cm2, a fully cross-linked anion conductive CCM formed by simultaneous functionalization and cross-linking all across the CCM as described in this invention, exhibits stability over more than 800 hours under same conditions. As an example, a fully cross-linked anion conductive CCM formed by simultaneous functionalization and cross-linking all across the CCM as shown in this invention, has been used to assembly a 6 cell AMFC stack, which was tested under on-off cycling switching between operation at 0 and 150mW/, for 4 and 10 hours, respectively. The plot shown in Figure 10 illustrates the cell voltage stability of the 6 cell stack.

Also, the method described in this invention does not require soaking the anion conductive CCM in any hydroxide solution, such as KOH, as required in prior art. The anion conductive CCM prepared by the method described in this invention can be activated without need of soaking it into NaOH or KOH. The anion conductive CCM formed by simultaneous functionalization and cross-linking across all the CCM can be formed into the final OH- form by in-situ activation alone using high current density steps. This important advantage of assembling the stack with the CCM in dry from and activating by current alone is thanks to the ability to activate with high current in-situ without damage by delamination as is likely in the case of less robust CCM structures.

It has been found that it is likely that application of catalyst layer in precursor form onto a membrane in precursor form generates a better interfacial adhesion vs. application of a catalyst layer in ionic form to a membrane in ionic form. Consequently, the strength of the CL-M bond is pre-secured by superior adhesion in the precursor form of the unitized CCM, generating a better "interface preparation" for the subsequent cross-linking.

Moreover, the CCM making techniques described herein can also be applied in alkaline membrane-based elctrolyzers (AME), in which anion conductive CCMs of the type taught above for fuel cells are used as the core component of an alkaline membrane-based electrolyzer for production of hydrogen from water. As in the case of AMFCs, electolyzers employing alkaline membranes enable use of non-precious metal catalysts. A robust CCM secured by the "across the CCM" bonding technique invention described here, will assist in the case of electrolyzer as well with rendering of good structural stability to the CCM and, hence, extending its useful life.

The methods according to the invention include forming or constructing membrane electrode assemblies (MEAs) for use in AMFCs including catalyst coated membranes (CCMs) as described in the above examples and further including gas diffusion layers (GDLs). In addition, the invention is not limited to the methods and processes disclosed herein and it is envisioned that the invention embodies and encompasses MEAs, CCMs and AMFCs including one or more of the cell membranes, thin films, and catalyst layers as described in the above examples.

## Claims

1. A method of forming a catalyst coated membrane "CCM" for an alkaline membrane fuel cell "AMFC" comprising OH-ion conducting catalyst layers and an ion-conducting membrane, wherein the ionomer throughout the entire CCM is cross-linked in one chemical step including cross-linking catalyst layers within the ion-conducting membrane, enabling simultaneous chemical bonding across the interfaces between the catalyst layers and the ion-conducting membrane, wherein said catalyst layers are anode/cathode catalyst layers deposited on both sides of the membrane and wherein the CCM is a continuous polymer cross-linked structure in which no polymer interfaces are distinguishable, the method comprising:
(i) soaking the whole alkaline membrane fuel cell CCM precursor into a solution, or dispersion of (a) an anion conducting ionomer material, and (b) amine compound mixture; to form a fully functionalized CCM, wherein on cross-linking the membrane is in precursor form and is catalyzed on each of its sides by the catalyst layers containing ionomers in precursor form and wherein conversion of CCM to ionic form is performed simultaneously with the cross-linking step, wherein the CCM precursor is produced by : depositing a thin film of non-ionic conducting precursor polymer mixed with metal or oxide catalysts on both sides of a thin non-ion conducting polymer precursor membrane, wherein the thin non-ion conducting polymer membrane thickness is between 5µm and 40µm, more preferably between 10µm and 30µm, and wherein the cross-linking functionality is introduced into the overall CCM structure and converts the entire alkaline membrane fuel cell non-ion conducting, precursor CCM into an alkaline membrane fuel cell anion conducting CCM cell;
(ii) further soaking and washing the fully functionalized CCM in sulfuric acid;
(iii) further soaking and washing the fully functionalized CCM in sodium or potassium bicarbonate aqueous solution;
(iv) further soaking and washing the fully functionalized CCM in water;
(v) further drying of the fully functionalized CCM at room temperature; and
(vi) compressing of the fully functionalized dried CCM at room temperature.

2. The method of claim 1 wherein the amine based compound mixture comprises at least two of the following types of compounds:
(a) monoamine and/or linear diamine;
(b) free base tetrakis pyridinium porphyrin, free base tripyridinium porphyrin, free base dipyridinium porphyrin;
(c) branched polyethyleneimine, polypropyleneimine dendrimers;
(d) free base tetrakis pyrrolidinium porphyrin, free base triprrolidinium porphyrin, free base dipyrrolidinium porphyrin; and
(e) free base tetrakis morpholinium porphyrin, free base trimorpholinium porphyrin, free base dimorpholinium porphyrin.

3. The method of claim 1 wherein the amine based compound mixture comprises:
(a) Monoamine and/or linear diamine
(b) Metal based tetrakis pyridinium porphyrin, metal based tripyridinium porhyrin, metal based dipyridinium porphyrin.

## Patentansprüche

1. Verfahren zum Bilden einer katalysatorbeschichteten Membran "CCM" (catalyst coated membrane) für eine Alkalimembran-Brennstoffzelle "AMFC" (alkaline membrane fuel cell) umfassend OH-ionenleitende Katalysatorschichten und eine ionenleitende Membran, wobei das Ionomer innerhalb der gesamten CCM in einem chemischen Schritt vernetzt wird, einschließlich Vernetzen von Katalysatorschichten innerhalb der ionenleitenden Membran, wodurch gleichzeitiges chemisches Binden über die Schnittstellen zwischen den Katalysatorschichten und der ionenleitenden Membran ermöglicht wird, wobei die Katalysatorschichten Anoden/Kathodenkatalysatorschichten sind, die auf beiden Seiten der Membran abgeschieden wurden und wobei die CCM eine durchgehende, quervernetzte Polymerstruktur ohne unterscheidbare Polymerschnittstellen ist, wobei das Verfahren Folgendes umfasst:
(i) Tränken des gesamten CCM-Vorläufers der Alkalimembran-Brennstoffzelle in einer Lösung oder Dispersion
(a) eines anionenleitenden Ionomermaterials und (b) eines Aminverbindungsgemisches; um eine vollständig funktionalisierte CCM zu bilden, wobei die Membran nach Vernetzen in einer Vorläuferform vorliegt und auf jeder ihrer Seiten von den Katalysatorschichten, die in Vorläuferform vorliegende Ionomere beinhalten, katalysiert wird, wobei ein Umwandeln der CCM in die ionische Form gleichzeitig mit dem Vernetzungsschritt erfolgt, wobei der CCM-Vorläufer durch Abscheiden eines dünnen Films eines nichtionisch leitenden Vorläuferpolymers, der mit Metall- oder Oxidkatalysatoren versetzt ist, auf beiden Seiten einer dünnen, nichtionisch leitenden Polymervorläufermembran aufgebracht wird, wobei die dünne nichtionisch leitende Polymermembrandicke zwischen 5 µm und 40 µm liegt, bevorzugt zwischen 10 µm und 30 µm, wobei die Vernetzungsfunktionalität in die CCM-struktur insgesamt eingeführt wird und die gesamte nichtionisch leitende Vorläufer-CCM der Alkalimembran-Brennstoffzelle in eine anionisch leitende Vorläufer-CCM einer Alkalimembran-Brennstoffzelle umwandelt;
(ii) ferner Tränken und Nachwaschen der vollständig funktionalisierten CCM in Schwefelsäure;
(iii) ferner Tränken und Nachwaschen der vollständig funktionalisierten CCM in Natrium- oder wässriger Kaliumbicarbonatlösung;
(iv) ferner Tränken und Nachwaschen der vollständig funktionalisierten CCM in Wasser;
(v) ferner Trocknen der vollständig funktionalisierten CCM bei Raumtemperatur; und
(vi) Verpressen des vollständig funktionalisierten CCM bei Raumtemperatur.

2. Verfahren nach Anspruch 1, wobei das Verbindungsgemisch auf Aminbasis mindestens zwei der folgenden Typen von Verbindungen umfasst:
(a) Monoamin und/oder lineares Diamin;
(b) Tetrakispyridiniumporphyrin als freie Base, Tripyridiniumporphyrin als freie Base, Dipyridiniumporphyrin als freie Base;
(c) verzweigtes Polyethylenimin, Polypropylenimindendrimer;
(d) Tetrakispyrrolidiniumporphyrin als freie Base, Trip[y]rrolidiniumporphyrin als freie Base, Dipyrrolidiniumporphyrin als freie Base; und
(e) Tetrakismorpholiniumporphyrin als freie Base, Trimorpholiniumporphyrin als freie Base, Dimorpholiniumporphyrin als freie Base.

3. Verfahren nach Anspruch 1, wobei das Verbindungsgemisch auf Aminbasis Folgendes umfasst:
(a) Monoamin und/oder lineares Diamin
(b) Tetrakispyridiniumporphyrin auf Metallbasis, Tripyridiniumporhyrin auf Metallbasis, Dipyridiniumporphyrin auf Metallbasis.

## Revendications

1. Procédé de formation d'une membrane revêtue d'un catalyseur « CCM » pour une pile à combustible à membrane alcaline « AMFC » comprenant des couches de catalyseur conducteur d'ion OH et une membrane conductrice d'ions, dans lequel l'ionomère sur l'ensemble du CCM est réticulé en une seule étape chimique comprenant la réticulation de couches de catalyseur dans la membrane conductrice d'ions, permettant une liaison chimique simultanée sur les interfaces entre les couches de catalyseur et la membrane conductrice d'ions, dans lequel lesdites couches de catalyseur sont des couches de catalyseur anodiques/cathodiques déposées des deux côtés de la membrane, et dans lequel le CCM est une structure réticulée polymère continue dans lequel aucune interface polymère ne peut être distinguée, le procédé comprenant :
(i) de tremper l'ensemble du précurseur CCM de la pile à combustible à membrane alcaline dans une solution ou la dispersion
(a) d'un matériau ionomère conducteur d'anions, et (b) d'un mélange de composés d'amines ; pour former un CCM entièrement fonctionnalisé, dans lequel la réticulation de la membrane est sous forme de précurseur et est catalysée sur chacun de ses côtés par les couches de catalyseur contenant des ionomères sous forme de précurseur, et dans lequel la conversion du CCM en forme ionique est réalisée simultanément avec l'étape de réticulation, dans laquelle le précurseur CCM est produit en déposant un mince film de polymère précurseur non ionique conducteur mélangé à des catalyseurs métalliques ou d'oxydes sur les deux côtés d'une mince membrane de précurseur polymère non ionique, dans laquelle l'épaisseur de la mince membrane polymère non conductrice ionique est comprise entre 5 µm et 40 µm, plus préférentiellement entre 10 µm et 30 µm, et dans laquelle la fonctionnalité de réticulation est introduite dans la structure globale du CCM et convertit tout le précurseur CCM non conducteur de la pile à combustible à membrane alcaline en une cellule CCM conductrice d'anion de pile à combustible à membrane alcaline ;
(ii) d'encore tremper et laver le CCM entièrement fonctionnalisé dans de l'acide sulfurique ;
(iii) de poursuivre le trempage et le lavage du CCM entièrement fonctionnalisé dans une solution aqueuse de bicarbonate de sodium ou de potassium ;
(iv) de tremper et laver davantage le CCM entièrement fonctionnalisé dans de l'eau ;
(v) d'encore sécher le CCM entièrement fonctionnalisé à température ambiante ; et
(vi) de comprimer le CCM séché entièrement fonctionnalisé à la température ambiante ;

2. Procédé selon la revendication 1, dans lequel le mélange de composés à base d'amine comprend au moins deux types des composés suivants :
a) une monoamine et/ou diamine linéaire ;
b) une tétrakis pyridinium porphyrine base libre, une tripyridinium porphyrine base libre, une dipyridinium porphyrine base libre;
c) une polyéthylèneimine ramifiée, des dendrimères de polypropylèneimine ;
d) une tétrakis pyrrolidinium porphyrine base libre, une tripyrrolidinium porphyrine base libre, une dipyrrolidinium porphyrine base libre; et
e) une tétrakis morpholinium porphyrine base libre, une trimorpholinium porphyrine base libre, une dimorpholinium porphyrine base libre.

3. Procédé selon la revendication 1, dans lequel le mélange de composés à base d'amine comprend :
a) Une monoamine et/ou diamine linéaire
b) Une tétrakis pyridinium métalloporphyrine, tripyridinium métalloporphyrine, dipyridinium métalloporphyrine.
